# EUROPÄISCHE PATENTSCHRIFT

(11) **EP 3 520 958 B1**
(45) Veröffentlichungstag und Bekanntmachung des Hinweises auf die Patenterteilung: **08.03.2023**
(21) Anmeldenummer: 19154546.6
(22) Anmeldetag: 30.01.2019
(51) Int. Cl.: B23Q 17/00, B23Q 17/09, B23Q 17/22

(54) **VERFAHREN UND VORRICHTUNG ZUM ÜBERWACHEN EINES WERKZEUGSPANNSYSTEMS EINER ARBEITSSPINDEL EINER NUMERISCH GESTEUERTEN WERKZEUGMASCHINE**
METHOD AND DEVICE FOR MONITORING A WORKPIECE TENSIONING SYSTEM OF A WORK SPINDLE OF A NUMERICALLY CONTROLLED MACHINE TOOL
PROCÉDÉ ET DISPOSITIF DE SURVEILLANCE D'UN SYSTÈME DE SERRAGE D'OUTIL D'UNE BROCHE DE TRAVAIL D'UNE MACHINE-OUTIL À COMMANDE NUMÉRIQUE

(30) Priorität: 30.01.2018 DE 102018201427
(43) Veröffentlichungstag der Anmeldung: 07.08.2019
(73) Patentinhaber: DECKEL MAHO Pfronten GmbH, 87459 Pfronten (DE)
(72) Erfinder: Kettemer, Rolf, 87616 Marktoberdorf (DE)
(74) Vertreter: MERH-IP Matias Erny Reichl Hoffmann Patentanwälte PartG mbB

(56) Entgegenhaltungen:
- EP-A1- 1 889 685
- EP-A1- 2 759 369
- EP-A1- 2 924 526
- EP-A2- 2 829 859
- WO-A1-2007/104438
- DE-A1- 10 351 347
- DE-A1-102011 100 126
- JP-A- 2000 079 537

## Beschreibung

Die vorliegende Erfindung betrifft ein Verfahren bzw. eine Vorrichtung zum Überwachen eines Werkzeugspannsystems einer Arbeitsspindel einer numerisch gesteuerten Werkzeugmaschine mit einer Steuerungsvorrichtung zum Steuern einer Bearbeitung eines Werkstücks mit einem mittels einer Werkzeugschnittstelle an der Arbeitsspindel eingespannten Werkzeugs, wenn ein Werkzeug mittels einer Werkzeugschnittstelle an der Werkzeugschnittstellenaufnahme der Arbeitsspindel eingespannt ist, wobei die Arbeitsspindel eine Mehrzahl von Kraftsensoren an Auflageflächen einer Werkzeugschnittstellenaufnahme der Arbeitsspindel aufweist und Sensorwerte der Kraftsensoren der Arbeitsspindel an der Steuerungsvorrichtung bei mittels der Werkzeugschnittstelle an der Werkzeugschnittstellenaufnahme der Arbeitsspindel eingespanntem Werkzeug bereitgestellt werden.

### Hintergrund

Im Stand der Technik ist es bekannt, an numerisch gesteuerten Werkzeugmaschinen zur Bearbeitung eines Werkstücks mit einem mittels einer Werkzeugschnittstelle an der Arbeitsspindel eingespannten Werkzeugs das Werkzeugspannsystem der Arbeitsspindel der Werkzeugmaschine zu überwachen, wenn ein Werkzeug mittels der Werkzeugschnittstelle an der Werkzeugschnittstellenaufnahme der Arbeitsspindel eingespannt ist.

Hierbei ist es z.B. gemäß der EP 2 829 859 A2 vorgesehen, dass die Arbeitsspindel eine Mehrzahl von Kraftsensoren (z.B. Dehnungsmesstreifen oder andere Kraftsensoren) an Auflageflächen einer Werkzeugschnittstellenaufnahme der Arbeitsspindel aufweist, so dass Sensorwerte der Kraftsensoren der Arbeitsspindel an der Steuerungsvorrichtung der Werkzeugmaschine bei mittels der Werkzeugschnittstelle an der Werkzeugschnittstellenaufnahme der Arbeitsspindel eingespanntem Werkzeug bereitgestellt werden können.

Insbesondere zeigt die EP 2 829 859 A2 ein Verfahren zur Ermittlung von Verformungen eines geometrischen Körpers bzw. zum Messen von auf einen geometrischen Körper wirkenden Kräften bzw. Momenten mittels Kraft- oder Verformungsmesssensoren, soll angegeben werden, mit welchem eine genauere Ermittlung von Verformungen des geometrischen Körpers bzw. ein genaueres Messen von auf diesen wirkenden Kräften oder Momenten ermöglicht wird. Hierzu wird vorgeschlagen an dem geometrischen Körper mehrere Kraft- oder Verformungsmesssensoren in wenigstens zwei Gruppen so anzuordnen, dass eine erste Gruppe der Kraft- oder Verformungssensoren auf dem geometrischen Körper lastende Kräfte bzw. Verformungen des geometrischen Körpers entlang einer ersten Raumrichtung bezogen auf ein relativ zu dem geometrischen Körper ortsfesten Koordinatensystem erfasst und eine zweite Gruppe der Kraft- oder Verformungssensoren auf dem geometrischen Körper lastende Kräfte bzw. Verformungen des geometrischen Körpers entlang einer zweiten Raumrichtung bezogen auf ein relativ zu dem geometrischen Körper ortsfestes Koordinatensystem erfasst, die von der ersten Raumrichtung unabhängig ist, und dass Signalausgänge der Kraft- oder Verformungssensoren zur Signalerfassung und -auswertung und Ermittlung bzw. Beurteilung von in unterschiedlichen Raumrichtungen wirkenden Kraft- bzw. Verformungskomponenten zueinander in Relation gesetzt werden.

Hierbei ist es z.B. weiterhin gemäß der EP 2 924 526 A1 bekannt, Betriebsparameter an der Werkzeugmaschine basierend auf einer Sensorkonfiguration gemäß EP 2 829 859 A2 zu überwachen. Insbesondere zeigt die EP 2 924 526 A1 ein Verfahren zur Einrichtung und/oder Überwachung von Betriebsparametern einer Werkstückbearbeitungsmaschine, die einen Werkzeughalter und Mittel zum relativen Bewegen eines Werkstückes und des Werkzeughalters zueinander jedenfalls entlang einer ersten Achse aufweist, offenbart. Das erfindungsgemäße Verfahren zeichnet sich dadurch aus, dass im Bearbeitungsbetrieb des mit einem Werkzeug bestückten Werkzeughalters und im Angriff des Werkzeuges an ein Werkstück Werte für wenigstens eine der folgenden bei Interaktion zwischen dem Werkzeug und dem Werkstück am Werkzeug auftretenden und auf den Werkzeughalter übertragenen Messgrößen am Werkzeughalter erfasst und für den Ablauf der Bearbeitung aufgezeichnet werden: a. eine in Richtung parallel zu der ersten Achse wirkende Axialkraft, b. ein in Bezug auf die erste Achse oder eine parallel dazu liegenden Achse anliegendes Drehmoment, c. Biegemomente oder Biegemomentkomponenten nach Richtung und Betrag, wobei die ermittelten Werte für die wenigstens eine Messgröße verwendet werden, um eine im Hinblick auf eine verlängerte Standzeit des verwendeten Werkzeuges bei gleichzeitig eine Maximalbearbeitungszeit unterschreitende Bearbeitungszeit abgestimmte Einrichtung der Betriebsparameter vorzunehmen und/oder um den Bearbeitungsprozess im Hinblick auf eine Reproduzierbarkeit desselben und/oder einen Werkzeugverschleiß und/oder einen Maschinenfehler der Werkstückbearbeitungsmaschine zu überwachen.

Es ist eine Aufgabe der vorliegenden Erfindung, die Überwachung des Werkzeugspannsystems einer Arbeitsspindel vor und bei der Werkstückverarbeitung zu verbessern, und insbesondere bedienfreundlicher zu machen und/oder bei der Bearbeitung maschinen-, werkzeug- und/oder werkstückschonender die Bearbeitung durchführen zu können. Aus der Druckschrift DE 103 51 347 A1 ist eine Vorrichtung zur Aufnahme und zum Spannen eines Gegenstandes bekannt, wobei an der Vorrichtung mindestens eine Auflagefläche vorgesehen ist, auf welcher der Gegenstand für eine exakte Positionierung aufliegt. In beziehungsweise unter der Auflagefläche ist zumindest ein druck-, spannungs- oder kraftsensibler Sensor vorgesehen. Diese Druckschrift bildet die Basis für die Oberbegriffe der Ansprüche 1 und 13.

Aus der Druckschrift DE 10 2011 100126 A1 ist eine Arbeitsspindel bekannt, die eine Spannvorrichtung mit mehreren Spannelementen im Spindelkopf enthält, die zwischen einer Spannstellung und einer Lösestellung radial zur Längsachse der Arbeitsspindel bewegbar sind, und die jeweils an ihrer radial äußeren Seite zwei bezüglich der Langsachse geneigte Spannflächen aufweisen, die im gespannten Zustand des Werkzeugs mit zwei ebenfalls bezüglich der Längsachse der Arbeitsspindel geneigten Spannflächen, von denen eine an der radial inneren Seite des Werkzeugs oder Werkzeughalters und die andere an der radial inneren Seite des Spindelkopfes ausgebildet ist, in kraftübertragendem Eingriff stehen, sowie eine Messvorrichtung zur Messung der Spannkraft. Mindestens ein Kraftsensor in Form eines Oberflächenwellensensors ist innerhalb des Spindelkopfes der Arbeitsspindel in dem axialen Bereich zwischen den Spannflächen der Spannelemente an mindestens einem Spannelement oder an dem Spindelkopf so befestigt, dass auf ihn in der Spannstellung eine Kraft wirkt, deren Größe von der durch die Spannvorrichtung auf das Werkzeug ausgeübten Spannkraft abhängt.

Aus der Druckschrift JP 2000 079537 A ist eine Vorrichtung bekannt, bei der drei oder mehr Lagen von Widerstands-Dehnungsmessstreifen einzeln auf einer Oberfläche einer werkzeugseitigen Endfläche einer Spindel vorgesehen sind, wobei die jeweiligen ersten Spulen mit diesen verbunden sind. Die Widerstands-Dehnungsmessstreifen sind so vorgesehen, dass sie auf einer Seitenfläche der werkzeugseitigen Endfläche der Spindel erscheinen. Andererseits sind zweite Spulen so auf einem Spindelkopf vorgesehen. Es wird eine Brückenschaltung unter Verwendung der zweiten Spulen gebildet, und ein abnormaler Klemmzustand eines Werkzeughalters wird durch einen Brückenausgang erfasst.

### Zusammenfassung

Zur Lösung der vorstehenden Aufgabe wird ein Verfahren zum Überwachen eines Werkzeugspannsystems einer Arbeitsspindel einer numerisch gesteuerten Werkzeugmaschine gemäß Anspruch 1 vorgeschlagen, sowie eine Steuerungsvorrichtung zum Steuern einer Bearbeitung eines Werkstücks mit einem mittels einer Werkzeugschnittstelle an einer Arbeitsspindel einer numerisch gesteuerten Werkzeugmaschine eingespannten Werkzeugs und zum Überwachen eines Werkzeugspannsystems der Arbeitsspindel der Werkzeugmaschine gemäß Anspruch 13, sowie ferner ein entsprechendes Computerprogrammprodukt gemäß Anspruch 14. Abhängige Ansprüche betreffen bevorzugte Ausführungsbeispiele.

Gemäß einem Aspekt wird ein Verfahren zum Überwachen eines Werkzeugspannsystems einer Arbeitsspindel einer numerisch gesteuerten Werkzeugmaschine mit einer Steuerungsvorrichtung zum Steuern einer Bearbeitung eines Werkstücks mit einem mittels einer Werkzeugschnittstelle an der Arbeitsspindel eingespannten Werkzeugs, wenn ein Werkzeug mittels einer Werkzeugschnittstelle an der Werkzeugschnittstellenaufnahme der Arbeitsspindel eingespannt ist, vorgeschlagen.

Hierbei ist vorgesehen, dass die Arbeitsspindel eine Mehrzahl von Kraftsensoren an Auflageflächen einer Werkzeugschnittstellenaufnahme der Arbeitsspindel aufweist und Sensorwerte der Kraftsensoren der Arbeitsspindel an der Steuerungsvorrichtung bei mittels der Werkzeugschnittstelle an der Werkzeugschnittstellenaufnahme der Arbeitsspindel eingespanntem Werkzeug bereitgestellt werden.

Hierbei ist weiter vorgeschlagen, dass das Verfahren umfasst: Ermitteln einer Kraftverteilung an den Auflageflächen der Werkzeugschnittstellenaufnahme bei mittels der Werkzeugschnittstelle an der Werkzeugschnittstellenaufnahme der Arbeitsspindel eingespanntem Werkzeug auf Grundlage der bereitgestellten Sensorwerte der Kraftsensoren, und/oder Überwachen des Werkzeugspannsystems der Arbeitsspindel bei mittels der Werkzeugschnittstelle an der Werkzeugschnittstellenaufnahme der Arbeitsspindel eingespanntem Werkzeug an der Steuerungsvorrichtung auf Grundlage der ermittelten Kraftverteilung, insbesondere im Hinblick auf das Erfordernis des Ausführens von Sicherheitssteuerungsmaßnahmen zum Schutz vor Spindelbeschädigungen, Werkstückbeschädigungen und/oder Werkzeugbeschädigungen während der Werkstückbearbeitung.

Gemäß einem bevorzugten beispielhaften Aspekt umfasst das Verfahren: Ermitteln einer bei Einspannung des Werkzeugs an dem Werkzeugspannsystem der Arbeitsspindel wirkenden Einzugskraft auf Grundlage der ermittelten Kraftverteilung, insbesondere nach Einspannen des Werkzeugs.

Gemäß einem bevorzugten beispielhaften Aspekt umfasst das Verfahren: Vergleichen der ermittelten Einzugskraft mit einem oder mehreren Einzugskraft-Grenzwerten, und/oder Ausführen einer Sicherheitssteuerungsmaßnahme, wenn festgestellt wird, dass die ermittelte Einzugskraft zumindest einen der Einzugskraft-Grenzwerte unterschreitet.

Das Ausführen der Sicherheitssteuerungsmaßnahme umfasst bevorzugt: Ausgeben eines visuellen und/oder akustischen Warnsignals an einen Bediener der Werkzeugmaschine, Verlangsamen oder Stoppen eines Vorschubs einer, mehrere oder aller Vorschubachsen der Werkzeugmaschine, Reduzieren der Spindeldrehzahl der Arbeitsspindel oder Stoppen der Arbeitsspindel der Werkzeugmaschine, Steuerung der Vorschubachsen der Werkzeugmaschine zum Entfernen des Werkzeugs weg von dem Werkstück, und/oder Veranlassen eines Nothalts an der Werkzeugmaschine.

Gemäß einem bevorzugten beispielhaften Aspekt umfasst das Verfahren: Einstellen bzw. Festlegen der einen oder mehreren Einzugskraft-Grenzwerte in Abhängigkeit der Spindeldrehzahl, des Werkzeugtyps, der Werkzeuggröße, des Werkzeugschnittstellentyps und/oder der Werkzeugschnittstellengröße.

Gemäß einem bevorzugten beispielhaften Aspekt umfasst das Verfahren: Ausgeben der ermittelten Einzugskraft an einer graphischen Benutzeroberfläche der Steuerungsvorrichtung.

Gemäß einem bevorzugten beispielhaften Aspekt umfasst das Verfahren: Ermitteln einer bei Bearbeitung eines Werkstücks mit dem eingespannten Werkzeug an dem Werkzeugspannsystem der Arbeitsspindel und/oder an dem Werkzeug dynamisch wirkenden Axialkraft auf Grundlage der ermittelten Kraftverteilung, insbesondere während der Bearbeitung eines Werkstücks mit dem eingespannten Werkzeug.

Gemäß einem bevorzugten beispielhaften Aspekt umfasst das Verfahren: Vergleichen der ermittelten Axialkraft mit einem oder mehreren Axialkraft-Grenzwerten, und/oder Ausführen einer Sicherheitssteuerungsmaßnahme, wenn festgestellt wird, dass die ermittelte Axialkraft zumindest einen der einen oder mehreren Axialkraft-Grenzwerte überschreitet.

Gemäß einem bevorzugten beispielhaften Aspekt umfasst das Verfahren: Einstellen bzw. Festlegen der einen oder mehreren Axialkraft-Grenzwerte in Abhängigkeit der Einzugskraft, der Spindeldrehzahl, des Werkzeugtyps, der Werkzeuggröße, des Werkzeugschnittstellentyps und/oder der Werkzeugschnittstellengröße.

Gemäß einem bevorzugten beispielhaften Aspekt umfasst das Verfahren: Einstellen bzw. Festlegen der einen oder mehreren Axialkraft-Grenzwerte auf Basis der ermittelten Einzugskraft.

Gemäß einem bevorzugten beispielhaften Aspekt umfasst das Verfahren: Ausgeben der ermittelten Axialkraft an einer graphischen Benutzeroberfläche der Steuerungsvorrichtung.

Gemäß einem bevorzugten beispielhaften Aspekt umfasst das Verfahren: Ermitteln eines bei Bearbeitung eines Werkstücks mit dem eingespannten Werkzeug an dem Werkzeugspannsystem der Arbeitsspindel und/oder an dem Werkzeug dynamisch wirkenden Radialmoments auf Grundlage der ermittelten Kraftverteilung, insbesondere während der Bearbeitung eines Werkstücks mit dem eingespannten Werkzeug.

Gemäß einem bevorzugten beispielhaften Aspekt umfasst das Verfahren: Vergleichen des ermittelten Radialmoments mit einem oder mehreren Radialmoment-Grenzwerten, und/oder Ausführen einer Sicherheitssteuerungsmaßnahme, wenn festgestellt wird, dass das ermittelte Radialmoment zumindest einen der einen oder mehreren Radialmoment-Grenzwerte überschreitet.

Gemäß einem bevorzugten beispielhaften Aspekt umfasst das Verfahren: Einstellen bzw. Festlegen der einen oder mehreren Radialmoment-Grenzwerte in Abhängigkeit der Einzugskraft, der Spindeldrehzahl, des Werkzeugtyps, der Werkzeuggröße, des Werkzeugschnittstellentyps und/oder der Werkzeugschnittstellengröße.

Gemäß einem bevorzugten beispielhaften Aspekt umfasst das Verfahren: Einstellen bzw. Festlegen der einen oder mehreren Radialmoment-Grenzwerte auf Basis der ermittelten Einzugskraft bzw. auf Basis eines der ermittelten Einzugskraft entsprechenden kritischen Biegemoments und/oder Abhebemoments, insbesondere in Abhängigkeit des Werkzeugschnittstellentyps und/oder der Werkzeugschnittstellengröße.

Gemäß einem bevorzugten beispielhaften Aspekt umfasst das Verfahren: Ausgeben des ermittelten Radialmoments an einer graphischen Benutzeroberfläche der Steuerungsvorrichtung.

Gemäß einem bevorzugten beispielhaften Aspekt umfasst das Ausführen der Sicherheitssteuerungsmaßnahme: Ausgeben eines visuellen und/oder akustischen Warnsignals an einen Bediener der Werkzeugmaschine, Verlangsamen oder Stoppen eines Vorschubs einer, mehrere oder aller Vorschubachsen der Werkzeugmaschine, Reduzieren der Spindeldrehzahl der Arbeitsspindel oder Stoppen der Arbeitsspindel der Werkzeugmaschine, Steuerung der Vorschubachsen der Werkzeugmaschine zum Entfernen des Werkzeugs weg von dem Werkstück, und/oder Veranlassen eines Nothalts an der Werkzeugmaschine.

Gemäß einem bevorzugten beispielhaften Aspekt wird nach Einspannen des Werkzeugs an der Werkzeugschnittstellenaufnahme der Arbeitsspindel auf Grundlage der ermittelten Kraftverteilung festgestellt, ob zwischen Auflageflächen der Werkzeugschnittstellenaufnahme und entsprechenden Auflageflächen der Werkzeugschnittstelle des eingespannten Werkzeugs die Einspannsituation beeinflussende Störobjekte, insbesondere Verschmutzungen oder Späne, vorliegen.

Erfindungsgemäß umfasst das Verfahren: Ermitteln einer Position eines oder mehrerer die Einspannsituation beeinflussenden, zwischen Auflageflächen der Werkzeugschnittstellenaufnahme und entsprechenden Auflageflächen der Werkzeugschnittstelle des eingespannten Werkzeugs vorliegenden Störobjekte auf Grundlage der ermittelten Kraftverteilung, wenn auf Grundlage der ermittelten Kraftverteilung festgestellt wird, dass zwischen Auflageflächen der Werkzeugschnittstellenaufnahme und entsprechenden Auflageflächen der Werkzeugschnittstelle des eingespannten Werkzeugs ein oder mehrere die Einspannsituation beeinflussende Störobjekte vorliegen.

Gemäß einem bevorzugten beispielhaften Aspekt sind die Auflageflächen der Werkzeugschnittstelle des eingespannten Werkzeugs in Bezug auf einen Referenzpunkt der Werkzeugschnittstelle in Sektoren unterteilt, wobei bei dem Ermitteln der Position der einen oder mehreren vorliegenden Störobjekte auf Grundlage der ermittelten Kraftverteilung ein oder mehrere Sektoren der Auflageflächen der Werkzeugschnittstelle ermittelt werden, in denen Störobjekte vorliegen.

Gemäß einem bevorzugten beispielhaften Aspekt umfassen die Sektoren der Auflageflächen der Werkzeugschnittstelle mehrere Sektoren an einer Plananlagefläche der Werkzeugschnittstelle umfassen, und/oder die Sektoren der Auflageflächen der Werkzeugschnittstelle mehrere Sektoren an einer Kegelanlagefläche der Werkzeugschnittstelle umfassen.

Gemäß einem bevorzugten beispielhaften Aspekt ist die Steuerungsvorrichtung dazu eingerichtet, Positionsdaten auszugeben, die ermittelte Positionen von einen oder mehreren zwischen Auflageflächen der Werkzeugschnittstellenaufnahme und entsprechenden Auflageflächen der Werkzeugschnittstelle des eingespannten Werkzeugs vorliegenden Störobjekten angeben.

Gemäß einem bevorzugten beispielhaften Aspekt umfasst das Verfahren: Ausgeben der ermittelten Positionen der einen oder mehreren vorliegenden Störobjekte an einer graphischen Benutzeroberfläche der Steuerungsvorrichtung.

Gemäß einem weiteren beispielhaften Aspekt wird eine Steuerungsvorrichtung zum Steuern einer Bearbeitung eines Werkstücks mit einem mittels einer Werkzeugschnittstelle an einer Arbeitsspindel einer numerisch gesteuerten Werkzeugmaschine eingespannten Werkzeugs und zum Überwachen eines Werkzeugspannsystems der Arbeitsspindel der Werkzeugmaschine, wenn ein Werkzeug mittels einer Werkzeugschnittstelle an der Werkzeugschnittstellenaufnahme der Arbeitsspindel eingespannt ist, vorgeschlagen, wobei die Arbeitsspindel eine Mehrzahl von Kraftsensoren an Auflageflächen einer Werkzeugschnittstellenaufnahme der Arbeitsspindel aufweist und Sensorwerte der Kraftsensoren der Arbeitsspindel an der Steuerungsvorrichtung bei mittels der Werkzeugschnittstelle an der Werkzeugschnittstellenaufnahme der Arbeitsspindel eingespanntem Werkzeug bereitgestellt werden, und wobei die Steuerungsvorrichtung dazu eingerichtet ist: eine Kraftverteilung an den Auflageflächen der Werkzeugschnittstellenaufnahme bei mittels der Werkzeugschnittstelle an der Werkzeugschnittstellenaufnahme der Arbeitsspindel eingespanntem Werkzeug auf Grundlage der bereitgestellten Sensorwerte der Kraftsensoren zu ermitteln, und das Werkzeugspannsystems der Arbeitsspindel bei mittels der Werkzeugschnittstelle an der Werkzeugschnittstellenaufnahme der Arbeitsspindel eingespanntem Werkzeug an der Steuerungsvorrichtung auf Grundlage der ermittelten Kraftverteilung zu überwachen, insbesondere im Hinblick auf das Erfordernis des Ausführens von Sicherheitssteuerungsmaßnahmen zum Schutz vor Spindelbeschädigungen, Werkstückbeschädigungen und/oder Werkzeugbeschädigungen während der Werkstückbearbeitung.

Gemäß einem weiteren beispielhaften Aspekt wird ein Computerprogrammprodukt voreschlagen, umfassend Befehle, die bei der Ausführung des Programms durch einen Computer einer Steuerungsvorrichtung zum Steuern einer Bearbeitung eines Werkstücks mit einem mittels einer Werkzeugschnittstelle an einer Arbeitsspindel einer numerisch gesteuerten Werkzeugmaschine eingespannten Werkzeugs und zum Überwachen eines Werkzeugspannsystems der Arbeitsspindel der Werkzeugmaschine, wenn ein Werkzeug mittels einer Werkzeugschnittstelle an der Werkzeugschnittstellenaufnahme der Arbeitsspindel eingespannt ist, wobei die Arbeitsspindel eine Mehrzahl von Kraftsensoren an Auflageflächen einer Werkzeugschnittstellenaufnahme der Arbeitsspindel aufweist und Sensorwerte der Kraftsensoren der Arbeitsspindel an der Steuerungsvorrichtung bei mittels der Werkzeugschnittstelle an der Werkzeugschnittstellenaufnahme der Arbeitsspindel eingespanntem Werkzeug bereitgestellt werden, die Steuerungsvorrichtung dazu veranlassen ein Verfahren nach einem der vorstehenden Aspekte auszuführen.

### Kurzbeschreibung der Figuren

Fig. 1 zeigt eine schematische exemplarische Ausführung einer numerisch gesteuerten Werkzeugmaschine.
Fig. 2 zeigt eine schematische exemplarische Ansicht der Werkzeugeinspannung an der Arbeitsspindel der Werkzeugmaschine.
Fig. 3 zeigt ein exemplarisches Ablaufdiagramm einer beispielhaften Verfahrens zum Überwachen eines Werkzeugspannsystems der Arbeitsspindel der Werkzeugmaschine gemäß einem Ausführungsbeispiel der vorliegenden Erfindung.

### Detaillierte Beschreibung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

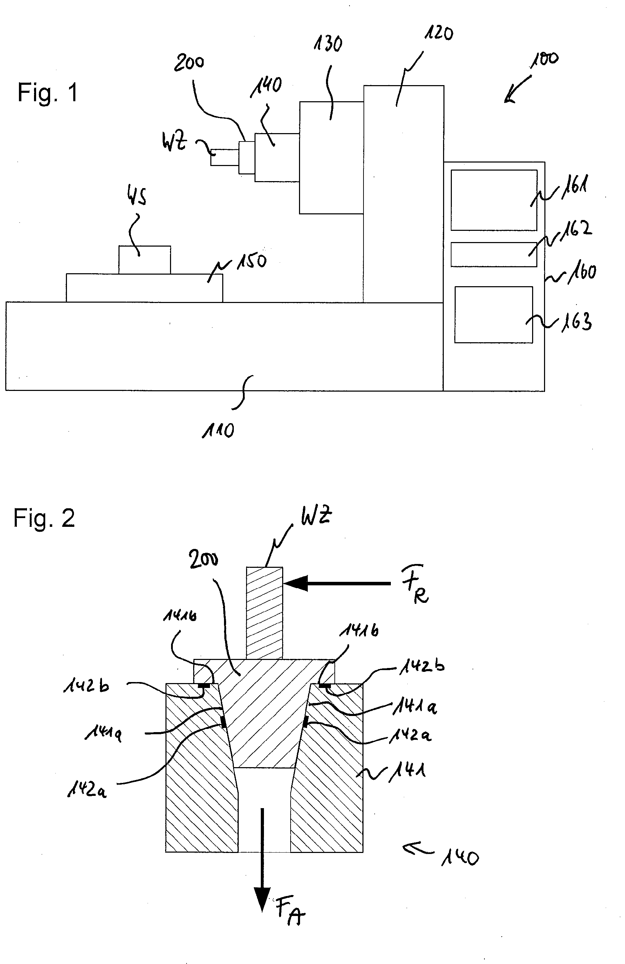

**Fig. 1** zeigt eine schematische exemplarische Ausführung einer numerisch gesteuerten Werkzeugmaschine 100.

Die Werkzeugmaschine 100 umfasst beispielhaft ein Maschinenbett 110, auf dem ein beispielhafter Werkstückeinspanntisch 150 angeordnet ist, der einen oder mehrere linear auf dem Maschinenbett 110 verfahrbare Schlitten umfassen kann und/oder eine oder mehrere rotatorisch antreibbare Rundachsen bzw. Schwenkachsen aufweisen kann, und auf dem ein Werkstück WS einspannbar ist.

Weiterhin umfasst die Werkzeugmaschine 100 beispielhaft einen Maschinenständer 120, an dem ein Spindelträger 130 mit einer Arbeitsspindel 140 angeordnet ist, der einen oder mehrere linear an dem Maschinenständer 120 verfahrbare Schlitten umfassen kann und/oder eine oder mehrere rotatorisch antreibbare Rundachsen bzw. Schwenkachsen aufweisen kann. Beispielhaft kann die Werkzeugmaschine 100 als 5-Achs- bzw. 6-Achs-Werkzeugmaschine ausgebildet sein.

An der Spindel 140 ist beispielhaft mittels einer Werkzeugschnittstelle 200 ein Werkzeug WZ eingespannt, z.B. ein Fräs- oder Bohrwerkzeug. Die Werkzeugschnittstelle 200 kann als Hohlschaftkegel, Steilkegel, Polygonschaftkegel, Morsekegel oder als anders bekannte Werkzeugschnittstelle ausgebildet sein.

Die Werkzeugmaschine 100 umfasst weiterhin eine computer-eingerichtete Steuerungsvorrichtung 160 mit einem Bildschirm 161 (ggf. als Touch-Monitor ausgebildet) und mit einem Eingabefeld 162 zum Eingeben von Steuerbefehlen bzw. Bedienbefehlen eines Bedieners, z.B. über eine Tastatur, Computermaus, Knöpfe oder Drehknöpfe. Weiterhin umfasst die Steuerungsvorrichtung 160 eine Datenverarbeitungseinrichtung 163 zum Speichern von Daten und zum Ausführen computer-gestützter Verfahren, z.B. mittels eines Prozessors.

Die Steuerungsvorrichtung 160 ist eingerichtet, eine Relativbewegung des eingespannten Werkzeugs WZ relativ zu dem eingespannten Werkstück WS ggf. auf Grundlage von NC-Steuerdaten zu steuern und Aktoren der Werkzeugmaschine (z.B. Achsantriebe) zu Steuern und Sensorsignale der Sensoren der Werkzeugmaschine 100 auszulesen.

**Fig. 2** zeigt eine schematische exemplarische Ansicht der Werkzeugeinspannung an der Arbeitsspindel der Werkzeugmaschine.

Die Arbeitsspindel 140 umfasst eine Werkzeugschnittstellenaufnahme 141, an der eine Werkzeugschnittstelle 200 eingespannt ist, wobei ein Werkzeug WZ an der Werkzeugschnittstelle 200 angebracht bzw. befestigt ist.

Die Auflageflächen der Werkzeugschnittstellenaufnahme 141, an denen Auflageflächen der Werkzeugschnittstelle 200 im eingespannten Zustand aufliegen, umfassen eine Mehrzahl von Kraftsensoren 142a bzw. 142b, die z.B. als Dehnungsmesstreifen ausgebildet ein können.

An einem Abschnitt der Plananlage 141b der Auflageflächen der Werkzeugschnittstellenaufnahme 141 sind Kraftsensoren 142b angeordnet und an einem Abschnitt der Kegelanlagefläche 141a der der Auflageflächen der Werkzeugschnittstellenaufnahme 141 sind Kraftsensoren 142a angeordnet. Über die Kraftsensoren 142a und 142b kann eine Kraftverteilung an Auflageflächen der Werkzeugschnittstelle 200 im eingespannten Zustand ermittelt werden, insbesondere im Bereich der Plananlage und der Kegelanlagefläche der Werkzeugschnittstelle 200.

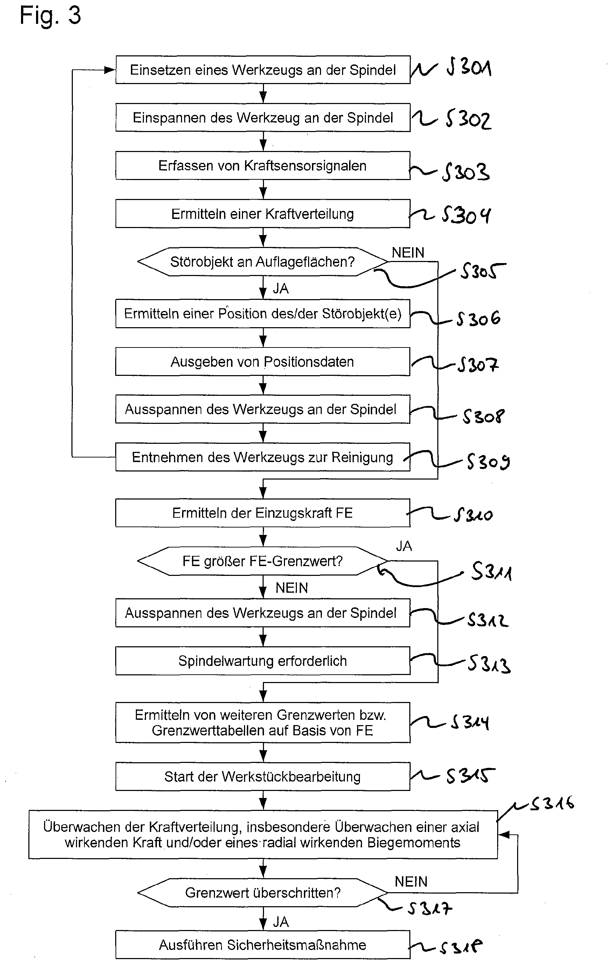

**Fig. 3** zeigt ein exemplarisches Ablaufdiagramm einer beispielhaften Verfahrens zum Überwachen eines Werkzeugspannsystems der Arbeitsspindel der Werkzeugmaschine gemäß einem Ausführungsbeispiel der vorliegenden Erfindung.

In Schritt S301 wird ein Werkzeug WS mittels der Werkzeugschnittstelle 200 an einer Werkzeugschnittstellenaufnahme 141 der Arbeitsspindel 140 der Werkzeugmaschine 100 eingesetzt und dann in Schritt S302 an der Arbeitsspindel 140 eingespannt.

In Schritt S303 werden die Sensorsignale der Kraftsensoren 142a und 142b an der Werkzeugschnittstellenaufnahme 141 der Arbeitsspindel 140 ausgelesen bzw. an der Steuerungsvorrichtung 160 bereitgestellt.

Im Schritt S304 wird an der Steuerungsvorrichtung 160 auf Grundlage der Sensorsignale der Mehrzahl von Kraftsensoren 142a und 142b an der Werkzeugschnittstellenaufnahme 141 der Arbeitsspindel 140 eine Kraftverteilung ermittelt, auf deren Basis axial (d.h. in Spindelachsrichtung) wirkende Kräfte und radial wirkende Kräfte bzw. Drehmomente ermittelt werden können.

Weiterhin ist es vorteilhaft möglich, die ermittelte Kraftverteilung auf etwaige Asymmetrien zu überprüfen und dadurch Rückschlüsse ziehen, ob die Werkzeugschnittstelle 200 korrekt an der Werkzeugschnittstellenaufnahme 141 der Arbeitsspindel 140 eingespannt ist, oder ob nach Einspannen des Werkzeugs WZ mit der Werkzeugschnittstelle an der Werkzeugschnittstellenaufnahme 141 der Arbeitsspindel 140 zwischen den Auflageflächen 141a und 141b der Werkzeugschnittstellenaufnahme 141 und entsprechenden Auflageflächen der Werkzeugschnittstelle 200 des eingespannten Werkzeugs WZ die Einspannsituation beeinflussende bzw. störende Störobjekte, insbesondere Späne oder andere Verschmutzungen, vorliegen.

In dem beispielhaften Schritt S305 wird auf Basis der in Schritt S304 ermittelten Kraftverteilung bestimmt, ob z.B. auf Grundlage einer festgestellten Asymmetrie erkannt werden kann, dass nach Einspannen des Werkzeugs WZ zwischen den Auflageflächen 141a und 141b der Werkzeugschnittstellenaufnahme 141 und den entsprechenden Auflageflächen der Werkzeugschnittstelle 200 ggf. Störobjekte, d.h. insbesondere Späne oder andere Verschmutzungen, vorliegen. Hierbei ist es möglich, Späne bzw. Verschmutzungen bis in den Bereich mit Störobjektgrößen von kleiner oder gleich 10 µm zu erkennen.

Falls Schritt S305 JA ergibt, wird auf Grundlage der in Schritt S304 ermittelten Kraftverteilung die Position der einen oder mehreren Störobjekte zwischen den Auflageflächen 141a und 141b der Werkzeugschnittstellenaufnahme 141 und den entsprechenden Auflageflächen der Werkzeugschnittstelle 200 ermittelt.

Das Verfahren umfasst somit den Schritt S306 des Ermittelns einer Position eines oder mehrerer die Einspannsituation beeinflussenden, zwischen Auflageflächen der Werkzeugschnittstellenaufnahme 141 und entsprechenden Auflageflächen der Werkzeugschnittstelle 200 des eingespannten Werkzeugs WZ vorliegenden Störobjekte auf Grundlage der ermittelten Kraftverteilung, wenn auf Grundlage der ermittelten Kraftverteilung festgestellt wird, dass zwischen Auflageflächen der Werkzeugschnittstellenaufnahme und entsprechenden Auflageflächen der Werkzeugschnittstelle des eingespannten Werkzeugs ein oder mehrere die Einspannsituation beeinflussende Störobjekte vorliegen (Schritt S305 ergibt JA).

Nach dem Ermitteln der Positionen der erkannten Störobjekte, ist die Steuervorrichtung dazu eingerichtet, die ermittelten Position(en) der erkannten Störobjekte in Positionsdaten zu speichern, und die Positionsdaten auszugeben (Schritt S307).

Weiterhin kann im Schritt S308 das Werkzeug WZ bzw. die Werkzeugschnittstelle 200 aus der Werkzeugschnittstellenaufnahme 141 der Arbeitsspindel 140 ausgespannt werden und in Schritt S309 zur Reinigung entnommen werden. Dies kann manuell durch den Bediener erfolgen oder auch durch eine Werkzeugwechselvorrichtung der Werkzeugmaschine 100 durchgeführt werden.

Nach Reinigung der Werkzeugschnittstelle 200 und/oder der Werkzeugschnittstellenaufnahme 141, bzw. der jeweiligen entsprechenden Auflageflächen kann das Werkzeug erneut an der Spindel 140 eingesetzt werden, z.B. um die Schritte S301 bis S305 nach Reinigung der Werkzeugschnittstelle 200 und/oder der Werkzeugschnittstellenaufnahme 141 erneut auszuführen.

Um dem Bediener die Reinigung der Werkzeugschnittstelle 200 und/oder der Werkzeugschnittstellenaufnahme 141 zu erleichtern, können die Positionsdaten ausgegeben werden, z.B. auch durch visuelle Anzeige an der Anzeigevorrichtung (Bildschirm) 161 der Steuerungsvorrichtung 160, um dem Bediener die ermittelten Position(en) der erkannten Störobjekte anzuzeigen.

In bevorzugten Ausführungsbeispielen können hierzu die Auflageflächen der Werkzeugschnittstelle 200 des eingespannten Werkzeugs WZ in Bezug auf einen Referenzpunkt der Werkzeugschnittstelle 200 in Sektoren unterteilt sein, wobei bei dem Ermitteln der Position(en) der einen oder mehreren vorliegenden Störobjekte auf Grundlage der ermittelten Kraftverteilung in Schritt S306 ein oder mehrere Sektoren der Auflageflächen der Werkzeugschnittstelle ermittelt werden, in denen die Störobjekte vorliegen.

Folglich kann dem Bediener z.B. über eine graphische Benutzeroberfläche der Steuerungsvorrichtung 160, z.B. auf dem Monitor 161, angezeigt werden, in welchem/welchen Sektor(en) der Auflageflächen der Werkzeugschnittstelle 200 des eingespannten Werkzeugs WZ Störobjekte vorliegen, so dass der Bediener diese(n) Sektor(en) reinigen kann bzw. effizienter auf die Störobjekte hin untersuchen kann.

Gemäß einem bevorzugten beispielhaften Aspekt umfassen die Sektoren der Auflageflächen der Werkzeugschnittstelle hierbei mehrere Sektoren an einer Plananlagefläche der Werkzeugschnittstelle und/oder umfassen die Sektoren der Auflageflächen der Werkzeugschnittstelle mehrere Sektoren an einer Kegelanlagefläche der Werkzeugschnittstelle umfassen.

Hierbei sind die Sektoren bevorzugt in Bezug auf einen für den Bediener erkennbaren Referenzpunkt der Werkzeugschnittstelle 200 angegeben. Ein derartiger Referenzpunkt kann an der Werkzeugschnittstelle 200 sichtbar angeordnet sein, z.B. durch farbliche Markierung oder Formgebungen bzw. Erhebungen (z.B. Nuten oder Erhebungen). Bei einigen Werkzeugschnittstellentypen sind derartige Referenzpunkte ggf. bereits vorhanden und im Falle einer Nut ist z.B. die Referenznut bekannt, die auch bei dem Fachmann als "deutsches Eck" bekannt ist.

Wenn nach Reinigung die Schritte S301 bis S305 wiederholt werden, oder falls keine Störobjekte vorliegen auch direkt, falls Schritt S305 NEIN ergibt, wird auf Basis der ermittelten Kraftverteilung aus Schritt S304 eine axial (d.h. in Spindelachsrichtung) wirkende Einzugskraft FE gemessen bzw. ermittelt; Schritt S310.

Im Schritt S311 wird an der Steuerungsvorrichtung 160 ermittelt, ob die ermittelte Einzugskraft FE einen Einzugskraft-Grenzwert unterschreitet, und falls festgestellt wird, dass die Einzugskraft FE den Einzugskraft-Grenzwert unterschreitet (Schritt S311 ergibt NEIN), wird das Werkzeug WZ bzw. die Werkzeugschnittstelle 200 an der Spindel 140 ausgespannt (und ggf. entnommen, z.B. analog Schritt S309), um ggf. eine Spindelwartung durchzuführen. Hierzu kann einem Bediener über die graphische Benutzeroberfläche der Steuerungsvorrichtung 160 ggf. angezeigt werden, dass eine Spindelwartung erforderlich ist, da an dem Spannsystem die erforderliche, die Bearbeitungssicherheit gewährleistende Einzugskraft beim Einspannen des Werkzeugs nicht mehr erreicht werden kann.

Falls Schritt S311 ergibt, dass die ermittelte Einzugskraft FE größer ist, als der Einzugskraft-Grenzwert (Schritt S311 ergibt JA), werden in Schritt S314 beispielhaft ein oder mehrere weitere Grenzwert ermittelt, insbesondere Grenzwerte für bei der Bearbeitung auftretende maximale Biegemomente (radial wirkende Drehmomente) und/oder für bei der Bearbeitung auftretende axial (d.h. in Spindelachsrichtung) wirkende Kräfte.

Dies kann auch auf Basis von in einem Speicher der Steuerungsvorrichtung hinterlegten Grenzwerttabellen in Abhängigkeit verschiedener Parameter erfolgen.

Hierbei können Grenzwerte auch auf Basis verschiedener Maßgaben erfolgen, z.B. Grenzwerte für bei der Bearbeitung auftretende maximale Biegemomente (radial wirkende Drehmomente) und/oder für bei der Bearbeitung auftretende axial (d.h. in Spindelachsrichtung) wirkende Kräfte unter der Maßgabe der Vermeidung zu hoher Spindelbelastungen bzw. Spindellagerbelastungen an der Spindel zur Vermeidung von zu hohem Verschleiß bzw. Beschädigungen an der Spindel oder an den Spindellagern.

Weiterhin ist es möglich, werkzeugspezifisch und/oder werkzeugschnittstellenspezifisch, d.h. z.B. an den Typ bzw. die Größe des entsprechenden Werkzeugs bzw. der Werkzeugschnittstelle angepasste Grenzwerte für bei der Bearbeitung auftretende maximale Biegemomente (radial wirkende Drehmomente) und/oder für bei der Bearbeitung auftretende axial (d.h. in Spindelachsrichtung) wirkende Kräfte einzustellen, unter der Maßgabe der Vermeidung zu hoher Biegemomente und/oder Axialkräfte am Werkzeug zur Vermeidung von Beschädigungen am Werkzeug (z.B. Schneidenbruch oder Werkzeugbruch), und/oder auch zur Vermeidung zu hoher radialer Momente auf die Werkzeugschnittstelle, insbesondere um die radial wirkenden Biegemomente unter der kritischen Biegemomente bzw. Abhebemomente der Werkzeugschnittstelle zu halten, um zu vermeiden, dass die eingespannte Werkzeugschnittstelle von den Plananlagen der Werkzeugschnittstellenauflage abhebt. Insbesondere ein oder mehrere Grenzwerte der maximal auftretenden Biegemomente / Radialmomente können bevorzugt auf Basis der Größe und/oder des Typs der Werkzeugschnittstelle und/oder bevorzugt in Abhängigkeit der in Schritt S310 ermittelten Einzugskraft FE eingestellt werden, insbesondere da unterschiedliche Werkzeugschnittstellen bei unterschiedlichen Größen und bei unterschiedlichen Einzugskräften unterschiedliche kritische Biegemomente bzw. unterschiedliche Abhebemomente aufweisen.

Insgesamt wird aufgrund von Untersuchungen vorgeschlagen, Bearbeitungen nur bei Einzugskräften über 18 kN durchzuführen. Hierbei ist jedoch z.B. für die Werkzeugschnittstelle HSK (Hohlschaftkegel) mit Größe HSK 63 bei einer Einzugskraft von 18 kN das Abhebemoment ca. 450 NM und bei einer Einzugskraft von 24 kN ist das Abhebemoment ca. 540 NM, so dass bei höheren Einzugskräften auch höhere Biegemomente möglich sind und höhere Radialmoment-Grenzwerte eingestellt werden können, als bei kleineren Einzugskräften. Dies bleibt qualitativ richtig für andere Werkzeugschnittstellengrößen, jedoch bei anderen Werten. Für die Werkzeugschnittstelle HSK (Hohlschaftkegel) mit Größe HSK 100 bei einer Einzugskraft von 40 kN ist das Abhebemoment ca. 1120 NM und bei einer Einzugskraft von 55 kN ist das Abhebemoment ca. 1400 NM. Folglich werden Grenzwerte für Radialmomente bevorzugt auf Basis der verwendeten Werkzeugschnittstelle und deren Größe eingestellt, jedoch bevorzugt weiterhin in Abhängigkeit der ermittelten Einzugskraft FE.

Hierbei können für bestimmte Werkzeuge, für bestimmte Werkzeugschnittstellen, bzw. deren Größen, verschiedene Grenzwerte vorgegeben werden, die auch bei verschiedenen Werten liegen können und unabhängig gleichzeitig bei der Bearbeitung des Werkstücks überwacht werden können, ggf. auch mit unterschiedlichen hinterlegten Sicherheitsmaßnahmen, die automatisch bei jeweiliger Grenzwertüberschreitung ausgeführt werden können/sollen. Grenzwerte können auch vom Bediener manuell nachjustiert werden, z.B. indem er an der graphischen Benutzeroberfläche angezeigte (ggf. vorgeschlagene) Grenzwerte anpassen kann, bzw. auch entsprechende auszuführende Sicherheitsmaßnahmen auswählen oder gar selbst programmieren kann.

So ist es z.B. möglich für jeden Werkzeugschnittstellentyp und jede Schnittstellengröße jeweilige Zuordnungsdaten vorzuspeichern (z.B. als Look-Up-Tabelle), die in Abhängigkeit der Einzugskraft das kritische Biegemoment bzw. das Abhebemoment angeben und ggf. auch bereits eine dazu passenden (kleineren bzw. wesentlich kleineren) Radialmoment-Grenzwert, der ggf. durch den Bediener weiter angepasst werden kann.

Weiterhin können auch weitere Grenzwert zum Schutz der Spindel und/oder Spindellager vorgegeben bzw. eingestellt werden, oder auch zum Schutz des Werkstücks.

Etwaige Sicherheitsmaßnahmen, die bei Überschreiten der Grenzwerte jeweils entsprechend von der Steuerungsvorrichtung auszuführen sind, können z.B. die folgenden Sicherheitsmaßnahmen umfassen:
- Ausgeben eines visuellen und/oder akustischen Warnsignals an einen Bediener der Werkzeugmaschine, z.B. über die graphische Benutzeroberfläche;
- Verlangsamen und/oder Stoppen eines Vorschubs einer, mehrere oder aller Vorschubachsen der Werkzeugmaschine;
- Reduzieren der Spindeldrehzahl der Arbeitsspindel und/oder Stoppen der Arbeitsspindel der Werkzeugmaschine;
- Steuerung der Vorschubachsen der Werkzeugmaschine zum Entfernen des Werkzeugs weg von dem Werkstück; und/oder
- Veranlassen eines Nothalts an der Werkzeugmaschine.

Nach dem Ermitteln der passenden Grenzwerte, ggf. auch nach Maßgabe bzw. Einstellung durch den Bediener oder gar auf Basis von zuvor in Testbearbeitungen ermittelten Grenzwerten (sog. Teachen), wird in Schritt S315 die Werkstückbearbeitung gestartet.

Hierbei kann die ermittelte Kraftverteilung durch kontinuierliches oder wiederholtes Einholen der Sensorsignale der Kraftsensoren und Ermitteln bzw. Überwachung der Kraftverteilung die axial wirkende Kraft bzw. die radial wirkenden Biegemomente überwacht werden; im Schritt S316.

Falls die radialen Biegemomente oder die axial wirkende Kraft einen der entsprechenden Grenzwerte überschreiten sollte (Schritt S317 ergibt JA), wird die Steuerungsvorrichtung die entsprechende, dem Grenzwert bzw. dem Parameter zugeordnete Sicherheitsmaßnahme automatisch ausführen, zum Schutz der Spindel, des Werkzeugs und/oder des Werkstücks.

Hierbei können die Grenzwerte auch nach etwaigen vorgegebenen Grenzwerttabellen oder Grenzwerttabellen abhängig von Vorschubgeschwindigkeiten bzw. Spindeldrehzahl dynamisch angepasst werden, z.B. durch höhere Grenzwerte bei steigenden Drehzahlen, etc.

Um die Genauigkeit des Ermittelns der dynamisch auftretenden Axialkräfte bei der Bearbeitung des Werkstücks zu überwachen, kann die in axialer Richtung gemessene Kraft nach Ermitteln der Einzugskraft FE auf Null geeicht bzw. zurückgestellt werden, um über die Einzugskraft hinaus axial wirkende Kräfte mit höherer Genauigkeit messen zu können und dem Bediener als zusätzlich auftretende Axialkraft direkt anzeigen zu können.

Die vorliegende Erfindung betrifft folglich eine vorteilhafte dynamische Überwachung der Radialmomente bzw. axialen Kräfte an dem Spannsystem der Spindel der Werkzeugmaschine bei der Werkstückbearbeitung und ermöglicht vorteilhaft die dynamisch angepasste, ggf. optimal voreingestellte Grenzwertüberwachung der Parameter zur Vermeidung von Beschädigungen der Spindel, Spindellager, Werkzeuge, Werkzeugschnittstellen und Werkstücke, je nach werkzeugspezifischer, werkzeugschnittstellenspezifischer, werkstückspezifischer und vom Spindelzustand abhängiger Bedingungen.

## Patentansprüche

1. Verfahren zum Überwachen eines Werkzeugspannsystems einer Arbeitsspindel (140) einer numerisch gesteuerten Werkzeugmaschine (100) mit einer Steuerungsvorrichtung (160) zum Steuern einer Bearbeitung eines Werkstücks mit einem mittels einer Werkzeugschnittstelle (200) an der Arbeitsspindel (140) eingespannten Werkzeugs (WZ), wenn ein Werkzeug mittels einer Werkzeugschnittstelle (200) an der Werkzeugschnittstellenaufnahme (141) der Arbeitsspindel (140) eingespannt ist,
wobei die Arbeitsspindel (140) eine Mehrzahl von Kraftsensoren (142a, 142b) an Auflageflächen einer Werkzeugschnittstellenaufnahme (141) der Arbeitsspindel (140) aufweist und Sensorwerte der Kraftsensoren (142a, 142b) der Arbeitsspindel (140) an der Steuerungsvorrichtung (160) bei mittels der Werkzeugschnittstelle (200) an der Werkzeugschnittstellenaufnahme (141) der Arbeitsspindel (140) eingespanntem Werkzeug (WZ) bereitgestellt werden,
das Verfahren umfassend:
- Ermitteln einer Kraftverteilung an den Auflageflächen der Werkzeugschnittstellenaufnahme (141) bei mittels der Werkzeugschnittstelle (200) an der Werkzeugschnittstellenaufnahme (141) der Arbeitsspindel (140) eingespanntem Werkzeug (WZ) auf Grundlage der bereitgestellten Sensorwerte der Kraftsensoren (142a, 142b), und
- Überwachen des Werkzeugspannsystems der Arbeitsspindel (140) bei mittels der Werkzeugschnittstelle (200) an der Werkzeugschnittstellenaufnahme (141) der Arbeitsspindel (140) eingespanntem Werkzeug (WZ) an der Steuerungsvorrichtung (160) auf Grundlage der ermittelten Kraftverteilung, insbesondere im Hinblick auf das Erfordernis des Ausführens von Sicherheitssteuerungsmaßnahmen zum Schutz vor Spindelbeschädigungen, Werkstückbeschädigungen und/oder Werkzeugbeschädigungen während der Werkstückbearbeitung
**gekennzeichnet durch**
- Ermitteln einer Position eines oder mehrerer die Einspannsituation beeinflussenden, zwischen Auflageflächen der Werkzeugschnittstellenaufnahme (141) und entsprechenden Auflageflächen der Werkzeugschnittstelle (200) des eingespannten Werkzeugs (WZ) vorliegenden Störobjekte auf Grundlage der ermittelten Kraftverteilung, wenn auf Grundlage der ermittelten Kraftverteilung festgestellt wird, dass zwischen Auflageflächen der Werkzeugschnittstellenaufnahme (141) und entsprechenden Auflageflächen der Werkzeugschnittstelle (200) des eingespannten Werkzeugs (WZ) ein oder mehrere die Einspannsituation beeinflussende Störobjekte vorliegen.

2. Verfahren gemäß Anspruch 1, **gekennzeichnet durch**
- Ermitteln einer bei Einspannung des Werkzeugs an dem Werkzeugspannsystem der Arbeitsspindel (140) wirkenden Einzugskraft (FE) auf Grundlage der ermittelten Kraftverteilung, insbesondere nach Einspannen des Werkzeugs.

3. Verfahren gemäß Anspruch 1 oder 2, **gekennzeichnet durch**
- Ermitteln einer bei Bearbeitung eines Werkstücks mit dem eingespannten Werkzeug (WZ) an dem Werkzeugspannsystem der Arbeitsspindel (140) und/oder an dem Werkzeug dynamisch wirkenden Axialkraft auf Grundlage der ermittelten Kraftverteilung, insbesondere während der Bearbeitung eines Werkstücks mit dem eingespannten Werkzeug (WZ).

4. Verfahren gemäß einem der vorhergehenden Ansprüche, **gekennzeichnet durch**
- Ermitteln eines bei Bearbeitung eines Werkstücks mit dem eingespannten Werkzeug (WZ) an dem Werkzeugspannsystem der Arbeitsspindel (140) und/oder an dem Werkzeug dynamisch wirkenden Radialmoments auf Grundlage der ermittelten Kraftverteilung, insbesondere während der Bearbeitung eines Werkstücks mit dem eingespannten Werkzeug (WZ).

5. Verfahren gemäß einem der vorhergehenden Ansprüche, **gekennzeichnet durch**
- Vergleichen einer auf Grundlage der ermittelten Kraftverteilung ermittelten Einzugskraft (FE) mit einem oder mehreren Einzugskraft-Grenzwerten,
- Vergleichen einer auf Grundlage der ermittelten Kraftverteilung ermittelten Axialkraft mit einem oder mehreren Axialkraft-Grenzwerten, und/oder
- Vergleichen eines auf Grundlage der ermittelten Kraftverteilung ermittelten Radialmoments mit einem oder mehreren Radialmoment-Grenzwerten; und
- Ausführen einer Sicherheitssteuerungsmaßnahme, wenn festgestellt wird, dass die ermittelte Einzugskraft (FE) zumindest einen der Einzugskraft-Grenzwerte unterschreitet, die ermittelte Axialkraft zumindest einen der einen oder mehreren Axialkraft-Grenzwerte überschreitet, und/oder das ermittelte Radialmoment zumindest einen der einen oder mehreren Radialmoment - Grenzwerte überschreitet.

6. Verfahren gemäß Anspruch 5, **gekennzeichnet durch**
- Einstellen bzw. Festlegen der einen oder mehreren Einzugskraft-Grenzwerte in Abhängigkeit der Spindeldrehzahl, des Werkzeugtyps, der Werkzeuggröße, des Werkzeugschnittstellentyps und/oder der Werkzeugschnittstellengröße,
- Einstellen bzw. Festlegen der einen oder mehreren Axialkraft-Grenzwerte in Abhängigkeit der Einzugskraft (FE), der Spindeldrehzahl, des Werkzeugtyps, der Werkzeuggröße, des Werkzeugschnittstellentyps und/oder der Werkzeugschnittstellengröße,
- Einstellen bzw. Festlegen der einen oder mehreren Axialkraft-Grenzwerte auf Basis der ermittelten Einzugskraft (FE),
- Einstellen bzw. Festlegen der einen oder mehreren Radialmoment-Grenzwerte in Abhängigkeit der Einzugskraft (FE), der Spindeldrehzahl, des Werkzeugtyps, der Werkzeuggröße, des Werkzeugschnittstellentyps und/oder der Werkzeugschnittstellengröße, und/oder
- Einstellen bzw. Festlegen der einen oder mehreren Radialmoment-Grenzwerte auf Basis der ermittelten Einzugskraft (FE) bzw. auf Basis eines der ermittelten Einzugskraft (FE) entsprechenden kritischen Biegemoments und/oder Abhebemoments, insbesondere in Abhängigkeit des Werkzeugschnittstellentyps und/oder der Werkzeugschnittstellengröße.

7. Verfahren gemäß Anspruch 5 oder 6, **dadurch gekennzeichnet, dass** das Ausführen der Sicherheitssteuerungsmaßnahme umfasst:
- Ausgeben eines visuellen und/oder akustischen Warnsignals an einen Bediener der Werkzeugmaschine (100),
- Verlangsamen oder Stoppen eines Vorschubs einer, mehrere oder aller Vorschubachsen der Werkzeugmaschine (100),
- Reduzieren der Spindeldrehzahl der Arbeitsspindel (140) oder Stoppen der Arbeitsspindel (140) der Werkzeugmaschine (100),
- Steuerung der Vorschubachsen der Werkzeugmaschine (100) zum Entfernen des Werkzeugs weg von dem Werkstück, und/oder
- Veranlassen eines Nothalts an der Werkzeugmaschine (100).

8. Verfahren gemäß einem der vorstehenden Ansprüche, **gekennzeichnet durch**
- Ausgeben einer auf Grundlage der ermittelten Kraftverteilung ermittelten Einzugskraft (FE), einer auf Grundlage der ermittelten Kraftverteilung ermittelten Axialkraft und/oder eines auf Grundlage der ermittelten Kraftverteilung ermittelten Radialmoments an einer graphischen Benutzeroberfläche der Steuerungsvorrichtung (160),

9. Verfahren gemäß einem der vorstehenden Ansprüche, **dadurch gekennzeichnet, dass**
nach Einspannen des Werkzeugs an der Werkzeugschnittstellenaufnahme (141) der Arbeitsspindel (140) auf Grundlage der ermittelten Kraftverteilung festgestellt wird, ob zwischen Auflageflächen der Werkzeugschnittstellenaufnahme (141) und entsprechenden Auflageflächen der Werkzeugschnittstelle (200) des eingespannten Werkzeugs (WZ) die Einspannsituation beeinflussende Störobjekte, insbesondere Verschmutzungen oder Späne, vorliegen.

10. Verfahren gemäß einem der vorstehenden Ansprüche, **dadurch gekennzeichnet, dass**
die Auflageflächen der Werkzeugschnittstelle (200) des eingespannten Werkzeugs (WZ) in Bezug auf einen Referenzpunkt der Werkzeugschnittstelle (200) in Sektoren unterteilt sind,
wobei bei dem Ermitteln der Position der einen oder mehreren vorliegenden Störobjekte auf Grundlage der ermittelten Kraftverteilung ein oder mehrere Sektoren der Auflageflächen der Werkzeugschnittstelle (200) ermittelt werden, in denen Störobjekte vorliegen.

11. Verfahren gemäß Anspruch 10, **dadurch gekennzeichnet, dass**
die Sektoren der Auflageflächen der Werkzeugschnittstelle (200) mehrere Sektoren an einer Plananlagefläche der Werkzeugschnittstelle (200) umfassen, und/oder
die Sektoren der Auflageflächen der Werkzeugschnittstelle (200) mehrere Sektoren an einer Kegelanlagefläche der Werkzeugschnittstelle (200) umfassen.

12. Verfahren gemäß einem der vorstehenden Ansprüche, **dadurch gekennzeichnet, dass**
die Steuerungsvorrichtung (160) dazu eingerichtet ist, Positionsdaten auszugeben, die ermittelte Positionen von einen oder mehreren zwischen Auflageflächen der Werkzeugschnittstellenaufnahme (141) und entsprechenden Auflageflächen der Werkzeugschnittstelle (200) des eingespannten Werkzeugs (WZ) vorliegenden Störobjekten angeben.

13. Steuerungsvorrichtung (160) zum Steuern einer Bearbeitung eines Werkstücks mit einem mittels einer Werkzeugschnittstelle (200) an einer Arbeitsspindel (140) einer numerisch gesteuerten Werkzeugmaschine (100) eingespannten Werkzeugs (WZ) und zum Überwachen eines Werkzeugspannsystems der Arbeitsspindel (140) der Werkzeugmaschine (100), wenn ein Werkzeug mittels einer Werkzeugschnittstelle (200) an der Werkzeugschnittstellenaufnahme (141) der Arbeitsspindel (140) eingespannt ist, wobei die Arbeitsspindel (140) eine Mehrzahl von Kraftsensoren (142a, 142b) an Auflageflächen einer Werkzeugschnittstellenaufnahme (141) der Arbeitsspindel (140) aufweist und Sensorwerte der Kraftsensoren (142a, 142b) der Arbeitsspindel (140) an der Steuerungsvorrichtung (160) bei mittels der Werkzeugschnittstelle (200) an der Werkzeugschnittstellenaufnahme (141) der Arbeitsspindel (140) eingespanntem Werkzeug (WZ) bereitgestellt werden,
wobei die Steuerungsvorrichtung (160) dazu eingerichtet ist:
- eine Kraftverteilung an den Auflageflächen der Werkzeugschnittstellenaufnahme (141) bei mittels der Werkzeugschnittstelle (200) an der Werkzeugschnittstellenaufnahme (141) der Arbeitsspindel (140) eingespanntem Werkzeug (WZ) auf Grundlage der bereitgestellten Sensorwerte der Kraftsensoren (142a, 142b) zu ermitteln, und
- das Werkzeugspannsystems der Arbeitsspindel (140) bei mittels der Werkzeugschnittstelle (200) an der Werkzeugschnittstellenaufnahme (141) der Arbeitsspindel (140) eingespanntem Werkzeug (WZ) an der Steuerungsvorrichtung (160) auf Grundlage der ermittelten Kraftverteilung zu überwachen, insbesondere im Hinblick auf das Erfordernis des Ausführens von Sicherheitssteuerungsmaßnahmen zum Schutz vor Spindelbeschädigungen, Werkstückbeschädigungen und/oder Werkzeugbeschädigungen während der Werkstückbearbeitung,
**dadurch gekennzeichnet, dass** die Steuerungsvorrichtung (160) ferner dazu eingerichtet ist:
- eine Position eines oder mehrerer die Einspannsituation beeinflussenden, zwischen Auflageflächen der Werkzeugschnittstellenaufnahme (141) und entsprechenden Auflageflächen der Werkzeugschnittstelle (200) des eingespannten Werkzeugs (WZ) vorliegenden Störobjekte auf Grundlage der ermittelten Kraftverteilung zu ermitteln, wenn auf Grundlage der ermittelten Kraftverteilung festgestellt wird, dass zwischen Auflageflächen der Werkzeugschnittstellenaufnahme (141) und entsprechenden Auflageflächen der Werkzeugschnittstelle (200) des eingespannten Werkzeugs (WZ) ein oder mehrere die Einspannsituation beeinflussende Störobjekte vorliegen.

14. Computerprogrammprodukt umfassend Befehle, die bei der Ausführung des Programms durch einen Computer einer Steuerungsvorrichtung (160) zum Steuern einer Bearbeitung eines Werkstücks mit einem mittels einer Werkzeugschnittstelle (200) an einer Arbeitsspindel (140) einer numerisch gesteuerten Werkzeugmaschine (100) eingespannten Werkzeugs (WZ) und zum Überwachen eines Werkzeugspannsystems der Arbeitsspindel (140) der Werkzeugmaschine (100), wenn ein Werkzeug mittels einer Werkzeugschnittstelle (200) an der Werkzeugschnittstellenaufnahme (141) der Arbeitsspindel (140) eingespannt ist, wobei die Arbeitsspindel (140) eine Mehrzahl von Kraftsensoren (142a, 142b) an Auflageflächen einer Werkzeugschnittstellenaufnahme (141) der Arbeitsspindel (140) aufweist und Sensorwerte der Kraftsensoren (142a, 142b) der Arbeitsspindel (140) an der Steuerungsvorrichtung (160) bei mittels der Werkzeugschnittstelle (200) an der Werkzeugschnittstellenaufnahme (141) der Arbeitsspindel (140) eingespanntem Werkzeug (WZ) bereitgestellt werden, die Steuerungsvorrichtung (160) dazu veranlassen ein Verfahren nach einem der Ansprüche 1 bis 12 auszuführen.

## Claims

1. A method for monitoring a tool clamping system of a work spindle (140) of a numerically controlled machine tool (100) having a control device (160) for controlling machining of a workpiece with a tool (WZ) clamped on the work spindle (140) by means of a tool interface (200), if a tool is clamped on the tool interface receptacle (141) of the work spindle (140) by means of a tool interface (200),
wherein said work spindle (140) has a plurality of force sensors (142a, 142b) on bearing surfaces of a tool interface receptacle (141) of the work spindle (140) and sensor values of the force sensors (142a, 142b) of the work spindle (140) are provided on the control device (160) when the tool (WZ) is clamped by means of the tool interface (200) on the tool interface receptacle (141) of the work spindle (140),
said method comprising:
- determining a force distribution on the bearing surfaces of the tool interface receptacle (141) when the tool (WZ) is clamped by means of the tool interface (200) on the tool interface receptacle (141) of the work spindle (140) on the basis of the sensor values provided by the force sensors (142a, 142b), and
- monitoring the tool clamping system of the work spindle (140) when the tool (WZ) is clamped on the tool interface receptacle (141) of the work spindle (140) by means of the tool interface (200) at the control device (160) on the basis of the force distribution determined, in particular with regard to the requirement to carry out safety control measures to protect against spindle damage, workpiece damage and/or tool damage during workpiece machining
**characterized by**
- determining a position of one or more interfering objects which influence the clamping situation and are present between bearing surfaces of the tool interface receptacle (141) and corresponding bearing surfaces of the tool interface (200) of the clamped tool (WZ) on the basis of the determined force distribution when it is determined on the basis of the determined force distribution that one or more interfering objects influencing the clamping situation are present between bearing surfaces of the tool interface receptacle (141) and corresponding bearing surfaces of the tool interface (200) of the clamped tool (WZ).

2. The method according to claim 1, **characterized by**
- determining a pull-in force (FE) acting on the tool clamping system of the work spindle (140) when the tool is clamped on the basis of the determined force distribution, in particular after clamping the tool.

3. The method according to claim 1 or 2, **characterized by**
- determining an axial force acting, when machining a workpiece with the clamped tool (WZ), dynamically on the tool clamping system of the work spindle (140) and/or on the tool on the basis of the determined force distribution, in particular during the machining of a workpiece with the clamped tool (WZ).

4. The method according to one of the preceding claims, **characterized by**
- determining a radial moment acting, when machining a workpiece with the clamped tool (WZ), dynamically on the tool clamping system of the work spindle (140) and/or on the tool on the basis of the determined force distribution, in particular during the machining of a workpiece with the clamped tool (WZ).

5. The method according to one of the preceding claims, **characterized by**
- comparing a pull-in force (FE) determined on the basis of the determined force distribution with one or more pull-in force limit values,
- comparing an axial force determined on the basis of the determined force distribution with one or more axial force limit values, and/or
- comparing a radial moment determined on the basis of the determined force distribution with one or more radial moment limit values; and
- carrying out a safety control measure when it is determined that the determined pull-in force (FE) falls below at least one of the pull-in force limit values, the determined axial force exceeds at least one of the one or more axial force limit values, and/or the determined radial moment exceeds at least one of the one or more radial moment limit values.

6. The method according to claim 5, **characterized by**
- setting or defining the one or more pull-in force limit values as a function of the spindle speed, the tool type, the tool size, the tool interface type and/or the tool interface size,
- setting or defining the one or more axial force limit values as a function of the pull-in force (FE), the spindle speed, the tool type, the tool size, the tool interface type and/or the tool interface size,
- setting or defining the one or more axial force limit values based on the determined pull-in force (FE),
- setting or defining the one or more radial moment limit values as a function of the pull-in force (FE), the spindle speed, the tool type, the tool size, the tool interface type and/or the tool interface size, and/or
- setting or defining the one or more radial moment limit values on the basis of the determined pull-in force (FE) or on the basis of a critical bending moment and/or lifting moment corresponding to the determined pull-in force (FE), in particular as a function of the tool interface type and/or the tool interface size.

7. The method according to claim 5 or 6, **characterized in that** carrying out the safety control measure comprises:
- outputting a visual and/or acoustic warning signal to an operator of the machine tool (100),
- slowing down or stopping a feed of one, a plurality of or all the feed axes of the machine tool (100),
- reducing the spindle speed of the work spindle (140) or stopping the work spindle (140) of the machine tool (100),
- controlling the feed axes of the machine tool (100) to remove the tool away from the workpiece, and/or
- triggering an emergency stop on the machine tool (100).

8. The method according to one of the preceding claims, **characterized by**
- outputting a pull-in force (FE) determined on the basis of the determined force distribution, an axial force determined on the basis of the determined force distribution and/or a radial moment determined on the basis of the determined force distribution to a graphical user interface of the control device (160),

9. The method according to one of the preceding claims, **characterized in that** after clamping the tool on the tool interface receptacle (141) of the work spindle (140), it is determined on the basis of the determined force distribution whether there are interfering objects, in particular dirt or chips, influencing the clamping situation between the bearing surfaces of the tool interface receptacle (141) and corresponding bearing surfaces of the tool interface (200) of the clamped tool (WZ).

10. The method according to one of the preceding claims, **characterized in that**
the bearing surfaces of the tool interface (200) of the clamped tool (WZ) are divided into sectors with respect to a reference point of the tool interface (200),
wherein, in determining the position of the one or more interfering objects present on the basis of the determined force distribution, one or more sectors of the bearing surfaces of the tool interface (200) are determined in which interfering objects are present.

11. The method according to claim 10, **characterized in that**
the sectors of the bearing surfaces of the tool interface (200) comprise a plurality of sectors on a planar bearing surface of the tool interface (200), and/or
the sectors of the bearing surfaces of the tool interface (200) comprise a plurality of sectors on a conical bearing surface of the tool interface (200).

12. The method according to one of the preceding claims, **characterized in that**
the control device (160) is configured to output position data indicating the determined positions of one or more interfering objects present between bearing surfaces of the tool interface receptacle (141) and corresponding bearing surfaces of the tool interface (200) of the clamped tool (WZ).

13. A control device (160) for controlling machining of a workpiece with a tool (WZ) clamped by means of a tool interface (200) on a work spindle (140) of a numerically controlled machine tool (100) and for monitoring a tool clamping system of the work spindle (140) of the machine tool (100 ) when a tool is clamped by means of a tool interface (200) on the tool interface receptacle (141) of the work spindle (140), wherein said work spindle (140) includes a plurality of force sensors (142a, 142b) on bearing surfaces of a tool interface receptacle (141) of the work spindle (140) and sensor values of the force sensors (142a, 142b) of the work spindle (140) are provided to the control device (160) when the tool (WZ) is clamped on the tool interface receptacle (141) of the work spindle (140) by means of the tool interface (200),
wherein said control device (160) is configured to:
- determine a force distribution on the bearing surfaces of the tool interface receptacle (141) when the tool (WZ) is clamped by means of the tool interface (200) on the tool interface receptacle (141) of the work spindle (140) on the basis of the sensor values provided by the force sensors (142a, 142b), and
- monitor the tool clamping system of the work spindle (140) when the tool (WZ) clamped on the tool interface receptacle (141) of the work spindle (140) by means of the tool interface (200) at the control device (160) on the basis of the determined force distribution, in particular with regard to the requirement to carry out safety control measures to protect against spindle damage, workpiece damage and/or tool damage during workpiece machining,
**characterized in that** the control device (160) is further configured to:
- determine a position of one or more interfering objects influencing the clamping situation and are present between bearing surfaces of the tool interface receptacle (141) and corresponding bearing surfaces of the tool interface (200) of the clamped tool (WZ) on the basis of the determined force distribution when it is determined on the basis of the determined force distribution that there are one or more interfering objects influencing the clamping situation between bearing surfaces of the tool interface receptacle (141) and corresponding bearing surfaces of the tool interface (200) of the clamped tool (WZ).

14. A computer program product comprising instructions that, when the program is executed by a computer of a control device (160) for controlling machining of a workpiece with a tool (WZ) and for monitoring a tool clamping system of the work spindle (140) of the machine tool (100) when a tool is clamped by means of a tool interface (200) on the tool interface receptacle (141) of the work spindle (140), wherein the work spindle (140) includes a plurality of force sensors (142a, 142b) on bearing surfaces of a tool interface receptacle (141) of the work spindle (140) and sensor values of the force sensors (142a, 142b) of the work spindle (140) are provided to the control device (160) when the tool (WZ) is clamped on the tool interface receptacle (141) of the work spindle (140) by means of the tool interface (200), cause the control device (160) to carry out a method according to one of claims 1 to 12.

## Revendications

1. Procédé pour la surveillance d'un système de serrage d'outil d'une broche de travail (140) d'une machine-outil (100) à commande numérique avec un dispositif de commande (160) pour la commande d'un usinage d'une pièce avec un outil (WZ) serré sur la broche de travail (140) au moyen d'une interface d'outil (200), lorsqu'un outil est serré sur le logement d'interface d'outil (141) de la broche de travail (140) au moyen d'une interface d'outil (200),
dans lequel la broche de travail (140) présente une pluralité de capteurs de force (142a, 142b) sur des surfaces d'appui d'un logement d'interface d'outil (141) de la broche de travail (140) et des valeurs de capteur des capteurs de force (142a, 142b) de la broche de travail (140) sont fournies au dispositif de commande (160) lorsque l'outil (WZ) est serré sur le logement d'interface d'outil (141) de la broche de travail (140) au moyen de l'interface d'outil (200),
le procédé comprenant :
- la détermination d'une répartition des forces sur les surfaces d'appui du logement d'interface d'outil (141) lorsque l'outil (WZ) est serré sur le logement d'interface d'outil (141) de la broche de travail (140) au moyen de l'interface d'outil (200) sur la base des valeurs de capteur des capteurs de force (142a, 142b) fournies, et
- la surveillance du système de serrage d'outil de la broche de travail (140) lorsque l'outil (WZ) est serré sur le logement d'interface d'outil (141) de la broche de travail (140) au moyen de l'interface d'outil (200) sur le dispositif de commande (160) sur la base de la répartition des forces déterminée, en particulier en ce qui concerne l'exigence de la mise en oeuvre de mesures de commande de sécurité pour la protection contre des endommagements de la broche, endommagements de la pièce et/ou endommagements de l'outil pendant l'usinage de la pièce,
**caractérisé par**
- la détermination d'une position d'un ou plusieurs objets perturbateurs influençant la situation de serrage, présents entre les surfaces d'appui du logement d'interface d'outil (141) et les surfaces d'appui correspondantes de l'interface d'outil (200) de l'outil (WZ) serré sur la base de la répartition des forces déterminée, lorsque sur la base de la répartition des forces déterminée il est constaté qu'un ou plusieurs objets perturbateurs influençant la situation de serrage sont présents entre les surfaces d'appui du logement d'interface d'outil (141) et les surfaces d'appui correspondantes de l'interface d'outil (200) de l'outil (WZ) serré.

2. Procédé selon la revendication 1, **caractérisé par**
- la détermination d'une force d'introduction (FE) agissant sur le système de serrage d'outil de la broche de travail (140) lors du serrage de l'outil sur la base de la répartition des forces déterminée, en particulier après le serrage de l'outil.

3. Procédé selon la revendication 1 ou 2, **caractérisé par**
- la détermination d'une force axiale agissant de manière dynamique sur le système de serrage d'outil de la broche de travail (140) et/ou sur l'outil lors de l'usinage d'une pièce avec l'outil (WZ) serré sur la base de la répartition des forces déterminée, en particulier pendant l'usinage d'une pièce avec l'outil (WZ) serré.

4. Procédé selon l'une quelconque des revendications précédentes, **caractérisé par**
- la détermination d'un couple radial agissant de manière dynamique sur le système de serrage d'outil de la broche de travail (140) et/ou sur l'outil lors de l'usinage d'une pièce avec l'outil (WZ) serré sur la base de la répartition des forces déterminée, en particulier pendant l'usinage d'une pièce avec l'outil (WZ) serré.

5. Procédé selon l'une quelconque des revendications précédentes, **caractérisé par**
- la comparaison d'une force d'introduction (FE) déterminée sur la base de la répartition des forces déterminée à une ou plusieurs valeurs limites de force d'introduction,
- la comparaison d'une force axiale déterminée sur la base de la répartition des forces déterminée à une ou plusieurs valeurs limites de force axiale, et/ou
- la comparaison d'un couple radial déterminé sur la base de la répartition des forces déterminée à une ou plusieurs valeurs limites de couple radial ; et
- la mise en oeuvre d'une mesure de commande de sécurité, lorsqu'il est constaté que la force d'introduction (FE) déterminée passe au-dessous d'au moins une des valeurs limites de force d'introduction, la force axiale déterminée dépasse au moins une des une ou plusieurs valeurs limites de force axiale, et/ou le couple radial déterminé dépasse au moins une des une ou plusieurs valeurs limites de couple radial.

6. Procédé selon la revendication 5, **caractérisé par**
- le réglage ou la définition des une ou plusieurs valeurs limites de force d'introduction en fonction de la vitesse de rotation de broche, du type d'outil, de la grandeur d'outil, du type d'interface d'outil et/ou de la grandeur d'interface d'outil,
- le réglage ou la définition des une ou plusieurs valeurs limites de force axiale en fonction de la force d'introduction (FE), de la vitesse de rotation de broche, du type d'outil, de la grandeur d'outil, du type d'interface d'outil et/ou de la grandeur d'interface d'outil,
- le réglage ou la définition des une ou plusieurs valeurs limites de force axiale sur la base de la force d'introduction (FE) déterminée,
- le réglage ou la définition des une ou plusieurs valeurs limites de couple radial en fonction de la force d'introduction (FE), de la vitesse de rotation de broche, du type d'outil, de la grandeur d'outil, du type d'interface d'outil et/ou de la grandeur d'interface d'outil, et/ou
- le réglage ou la définition des une ou plusieurs valeurs limites de couple radial sur la base de la force d'introduction (FE) déterminée ou sur la base d'un couple de flexion et/ou couple de levage critique correspondant à la force d'introduction (FE) déterminée, en particulier en fonction du type d'interface d'outil et/ou de la grandeur d'interface d'outil.

7. Procédé selon la revendication 5 ou 6, **caractérisé en ce que** la mise en oeuvre de la mesure de commande de sécurité comprend :
- la délivrance d'un signal d'avertissement visuel et/ou acoustique à un opérateur de la machine-outil (100),
- le ralentissement ou l'arrêt d'une avance d'un, de plusieurs ou de tous les axes d'avance de la machine-outil (100),
- la réduction de la vitesse de rotation de broche de la broche de travail (140) ou l'arrêt de la broche de travail (140) de la machine-outil (100),
- la commande des axes d'avance de la machine-outil (100) pour éloigner l'outil de la pièce, et/ou
- le déclenchement d'un arrêt d'urgence sur la machine-outil (100).

8. Procédé selon l'une quelconque des revendications précédentes, **caractérisé par**
- l'affichage d'une force d'introduction (FE) déterminée sur la base de la répartition des forces déterminée, d'une force axiale déterminée sur la base de la répartition des forces déterminée et/ou d'un couple radial déterminé sur la base de la répartition des forces déterminée sur une surface utilisateur graphique du dispositif de commande (160).

9. Procédé selon l'une quelconque des revendications précédentes, **caractérisé en ce que**
après le serrage de l'outil sur le logement d'interface d'outil (141) de la broche de travail (140), il est constaté sur la base de la répartition des forces déterminée si des objets perturbateurs influençant la situation de serrage, en particulier des salissures ou copeaux, sont présents entre les surfaces d'appui du logement d'interface d'outil (141) et les surfaces d'appui correspondantes de l'interface d'outil (200) de l'outil (WZ) serré.

10. Procédé selon l'une quelconque des revendications précédentes, **caractérisé en ce que**
les surfaces d'appui de l'interface d'outil (200) de l'outil (WZ) serré sont divisées en secteurs par rapport à un point de référence de l'interface d'outil (200),
dans lequel lors de la détermination de la position des un ou plusieurs objets perturbateurs présents un ou plusieurs secteurs des surfaces d'appui de l'interface d'outil (200), dans lesquels des objets perturbateurs sont présents, sont déterminés sur la base de la répartition des forces déterminée.

11. Procédé selon la revendication 10, **caractérisé en ce que**
les secteurs des surfaces d'appui de l'interface d'outil (200) comprennent plusieurs secteurs sur une surface d'installation plane de l'interface d'outil (200), et/ou
les secteurs des surfaces d'appui de l'interface d'outil (200) comprennent plusieurs secteurs sur une surface d'installation conique de l'interface d'outil (200).

12. Procédé selon l'une quelconque des revendications précédentes, **caractérisé en ce que**
le dispositif de commande (160) est conçu pour délivrer des données de position, qui indiquent des positions déterminées d'un ou plusieurs objets perturbateurs présents entre les surfaces d'appui du logement d'interface d'outil (141) et les surfaces d'appui correspondantes de l'interface d'outil (200) de l'outil (WZ) serré.

13. Dispositif de commande (160) pour commander un usinage d'une pièce avec un outil (WZ) serré sur une broche de travail (140) d'une machine-outil (100) à commande numérique au moyen d'une interface d'outil (200) et pour surveiller un système de serrage d'outil de la broche de travail (140) de la machine-outil (100), lorsqu'un outil est serré sur le logement d'interface d'outil (141) de la broche de travail (140) au moyen d'une interface d'outil (200), dans lequel la broche de travail (140) présente une pluralité de capteurs de force (142a, 142b) sur les surfaces d'appui d'un logement d'interface d'outil (141) de la broche de travail (140) et des valeurs de capteur des capteurs de force (142a, 142b) de la broche de travail (140) sont fournies au dispositif de commande (160) lorsque l'outil (WZ) est serré sur le logement d'interface d'outil (141) de la broche de travail (140) au moyen de l'interface d'outil (200),
dans lequel le dispositif de commande (160) est conçu pour :
- déterminer une répartition des forces sur les surfaces d'appui du logement d'interface d'outil (141) lorsque l'outil (WZ) est serré sur le logement d'interface d'outil (141) de la broche de travail (140) au moyen de l'interface d'outil (200) sur la base des valeurs de capteur des capteurs de force (142a, 142b) fournies, et
- surveiller le système de serrage d'outil de la broche de travail (140) lorsque l'outil (WZ) est serré sur le logement d'interface d'outil (141) de la broche de travail (140) au moyen de l'interface d'outil (200) sur le dispositif de commande (160) sur la base de la répartition des forces déterminée, en particulier en ce qui concerne l'exigence de la mise en oeuvre de mesures de commande de sécurité pour la protection contre des endommagements de la broche, des endommagements de la pièce et/ou des endommagements de l'outil pendant l'usinage de la pièce,
**caractérisé en ce que** le dispositif de commande (160) est conçu en outre :
- pour déterminer une position d'un ou plusieurs objets perturbateurs influençant la situation de serrage, présents entre les surfaces d'appui du logement d'interface d'outil (141) et les surfaces d'appui correspondantes de l'interface d'outil (200) de l'outil (WZ) serré sur la base de la répartition des forces déterminée, lorsqu'il est constaté sur la base de la répartition des forces déterminée qu'un ou plusieurs objets perturbateurs influençant la situation de serrage sont présents entre les surfaces d'appui du logement d'interface d'outil (141) et les surfaces d'appui correspondantes de l'interface d'outil (200) de l'outil (WZ) serré.

14. Produit programme d'ordinateur comprenant des instructions qui, lors de l'exécution du programme par un ordinateur d'un dispositif de commande (160) pour la commande d'un usinage d'une pièce avec un outil (WZ) serré sur une broche de travail (140) d'une machine-outil (100) à commande numérique au moyen d'une interface d'outil (200) et pour la surveillance d'un système de serrage d'outil de la broche de travail (140) de la machine-outil (100), lorsqu'un outil est serré sur le logement d'interface d'outil (141) de la broche de travail (140) au moyen d'une interface d'outil (200), dans lequel la broche de travail (140) présente une pluralité de capteurs de force (142a, 142b) sur les surfaces d'appui d'un logement d'interface d'outil (141) de la broche de travail (140) et des valeurs de capteur des capteurs de force (142a, 142b) de la broche de travail (140) sont fournies au dispositif de commande (160) lorsque l'outil (WZ) est serré sur le logement d'interface d'outil (141) de la broche de travail (140) au moyen de l'interface d'outil (200), amènent le dispositif de commande (160) à mettre en oeuvre un procédé selon l'une quelconque des revendications 1 à 12.
